# EUROPÄISCHE PATENTSCHRIFT

(11) **EP 3 629 762 B1**
(45) Veröffentlichungstag und Bekanntmachung des Hinweises auf die Patenterteilung: **16.10.2024**
(21) Anmeldenummer: 17733978.5
(22) Anmeldetag: 01.06.2017
(51) Int. Cl.: A23L 27/00, A23L 7/10, A21D 2/36, A23K 10/30, A23L 29/225

(54) **MEHLE ALS AROMATRÄGER**
FLOUR AS AROMA COMPOUND
FARINES EN TANT QUE SUPPORTS D'ARÔMES

(43) Veröffentlichungstag der Anmeldung: 08.04.2020
(73) Patentinhaber: Symrise AG, 37603 Holzminden (DE)
(72) Erfinder: SABATER, Christopher, 37603 Holzminden (DE); WEISSBRODT, Jenny, 37603 Holzminden (DE); MANTHEY, Michael, 56626 Andernach (DE)
(74) Vertreter: Eisenführ Speiser
(86) Internationale Anmeldenummer: PCT/EP2017/063350
(87) Internationale Veröffentlichungsnummer: WO 2018/219465

(56) Entgegenhaltungen:
- CN-A- 104 544 060
- DE-A1- 19 645 712
- DE-T2- 69 300 590
- GB-A- 952 640
- NL-A- 7 508 414
- GAO J ET AL: "Diet food useful for treating anemia in women, prepared by adding e.g. peanut peptide, soybean powder, red jujube, black sesame, and longan pulp, mixing, grinding, and spray drying mixture, and dissolving powder in warm water", WPI / 2017 CLARIVATE ANALYTICS,, vol. 2015, no. 63, 29 April 2015 (2015-04-29), XP002772424
- "Dried egg powder compsn. contg. e.g. flour - can be kept for long periods and is easy to store and transport", WPI / 2017 CLARIVATE ANALYTICS,, vol. 1977, no. 1, 13 December 1976 (1976-12-13), XP002772425
- CORREIA ROBERTA ET AL: "Wild blueberry polyphenol-protein food ingredients produced by three drying methods: Comparative physico-chemical properties, phytochemical content, and stability during storage", FOOD CHEMISTRY, ELSEVIER LTD, NL, vol. 235, 10 May 2017 (2017-05-10), pages 76 - 85, XP085042263, ISSN: 0308-8146, DOI: 10.1016/J.FOODCHEM.2017.05.042
- DATABASE WPI Week 201563, Derwent World Patents Index; AN 2015-39211U, XP002772424
- DATABASE WPI Week 197701, Derwent World Patents Index; AN 1977-01378Y, XP002772425

## Beschreibung

Die vorliegende Erfindung betrifft sprühgetrocknete Aromazusammensetzungen umfassend ein Aroma und Mehl als Trägerstoff. Insbesondere betrifft die vorliegende Erfindung sprühgetrocknete Aromazusammensetzungen mit Mehlen als Trägerstoff, bei denen der Einsatz von Emulgatoren reduziert werden bzw. vollständig auf den Einsatz von Emulgatoren verzichtet werden kann. Ferner betrifft die vorliegende Erfindung Verfahren zur Herstellung von sprühgetrockneten Aromazusammensetzungen wie hierin beschrieben. Schließlich betrifft die Erfindung auch die Verwendung von Mehl als Trägerstoff in einer sprühgetrockneten Aromazusammensetzung, insbesondere zum Verkapseln von Aromen in einer sprühgetrockneten Aromazusammensetzung.

Der Einschluss von Geschmacksstoffen und Ölen mittels Sprühtrocknung in verschiedene Trägermaterialien ist z.B. aus folgendem Dokument bekannt: Jafari S. "Encapsulation efficiency of food flavours and oils during spray drying", Drying Technology. 26: p. 816-835 (2008).

Aromastoffe werden in zahlreichen Nahrungs- und Genussmitteln, Halbfertigwaren, pharmazeutischen und kosmetischen Produkten, sowie Mundpflegeprodukten eingesetzt.

Bei der Herstellung einer sprühgetrockneten Aromazusammensetzungen wird der Trägerstoff in der Regel mit einem Emulgator (üblicherweise Gummi arabicum oder modifizierte Stärke) zunächst in Wasser dispergiert und sobald diese Mischung vollständig solvatisiert ist, wird das Aroma zugefügt und homogenisiert. Anschließend erfolgt die Sprühtrocknung zu einem Pulver.

Als Trägerstoff für Aromazusammensetzungen wird bislang standardmäßig Maltodextrin verwendet. Insbesondere wenn Produkte dem Verzehr dienen, wird es zunehmend attraktiver ausschließlich "natürliche" Inhaltsstoffe zu verwenden, d.h. solche Stoffe, die der Verbraucher sofort als gängiges Nahrungsmittel einordnet. Da Maltodextrin als "chemischer" Zusatz verstanden wird, erfüllt es diese Anforderung nicht.

Um geeignete Alternativen für so genannte "clean label"-Produkte zu finden wurden über 30 Materialien aus natürlichen Rohstoffen untersucht und auf Ihre Eignung als Trägerstoff für Aromen getestet. Darunter waren Mehle, Stärken, Dextrine, Inulin, Zucker, Malzextrakt und Fasern aus verschiedenen pflanzlichen Quellen vertreten. Zunächst wurden die Rohstoffe charakterisiert. Hierzu wurden die Trockenmasse, Staubwert, Partikelgröße, Fließfähigkeit und die Viskosität sowie Sedimentationsstabilität bei verschiedenen Trockenmassen in Dispersion gemessen. Geeignete Materialien wurden dann in einer Standardrezeptur als Ersatz und in direktem Vergleich zu Maltodextrin als bisher verwendeter Trägerstoff sprühgetrocknet. Die sprühgetrockneten Pulver wurden anschließend auf ihre Aromabeladung, Partikelgröße, Fließfähigkeit, Oberflächenöl, Öltröpfchengröße und Lagerstabilität unter europäischen und asiatischen Klimabedingungen untersucht.

Die Rohstoffcharakterisierung diente der Erfassung der Rohstoffeigenschaften und stellte noch kein Ausschlusskriterium dar. Die Trockenmasse wurde benötigt, um vergleichbare Mengen für die Rezepturen einwiegen zu können. Der Staubwert sollte möglichst gering sein, um die Sicherheit in der Produktion zu gewährleisten. Die Partikelgröße der Rohstoffe ist in Zusammenhang mit dem Staubwert zu sehen. Die Rohstoffe sollten möglichst frei fließend sein. Die Fließfähigkeit wurde als FFC-Wert mittels Texture-Analyser gemessen. Dabei bedeuten die Werte:
Die Fließfähigkeit wurde als FFC-Wert gemessen. Dabei gilt für die FFC - Werte:

| | |
|---|---|
| 0 < FFC < 11 | frei fließend |
| 11 < FFC < 14 | leicht fließend |
| 14 < FFC < 16 | kohäsiv |
| 16 < FFC < 19 | sehr kohäsiv |
| FFC > 19 | verfestigt |

Die Viskosität wurde in drei Stufen gemessen. Der Rohstoff wurde in einer Konzentration von 10, 30 und 60% in Wasser dispergiert und vermessen. Hierbei sollte die Viskosität der 30%igen Probe 300 mPa*s nicht überschreiten, damit der Rohstoff als Trägerstoff geeignet ist.

Die drei Konzentrationen der Träger in Wasser wurden mittels 12-24 stündigem Standtest auf Sedimentationsstabilität überprüft. Wünschenswert ist hier keinerlei Sedimentation für mindestens 12 Stunden.

Die Lagerstabilität wurde bei 40 °C und 80 % rel. Luftfeuchte sowie bei 60 °C und 55 % rel. Luftfeuchte untersucht indem 10 g der Proben in die zur Lagerung verwendeten Folien eingeschweißt und für 10 Tage bei den genannten Bedingungen gelagert wurden. Nach 10 Tagen wurden die Proben zurück gewogen und somit die Wasseraufnahme bestimmt. Weiterhin wurden die Proben optisch auf ihre Konsistenz hin geprüft. Erwünscht waren hier Proben mit geringer bis keiner Wasseraufnahme und bestehender Fließfähigkeit nach der Lagerung.

Überraschenderweise wurde nun herausgefunden, dass Mehle nicht nur die oben genannten Anforderungen zufriedenstellend erfüllen, sondern darüberhinaus Aromen durch Sprühtrocknung so effizient verkapseln können, dass die Aromen vor oxidativem Verderb noch besser geschützt sind als mit dem Standardträger Maltodextrin. Zudem kann der standardmäßige Einsatz von Emulgatoren reduziert bzw. sogar vollständig auf Emulgatoren verzichtet werden.

Es wird davon ausgegangen, dass der natürliche Proteingehalt des Mehls den überraschenden Verkapselungseffekt dadurch verursacht, dass sich die Proteine an der Grenzfläche anlagern, die Emulsion bis zur Trocknung stabilisieren und später im Pulver durch eine verstärkte Grenzschicht das Aroma vor der Oxidation schützen. Reine Stärke dagegen ist beispielsweise nicht geeignet die Emulsion stabil zu halten.

In Tabelle 1 sind die Ergebnisse der beschleunigten Lagertests gezeigt. Die Stärken fallen insgesamt durch den beschleunigten Lagertest durch. Die Mehle zeigen dagegen einen guten Schutz des Aromas über die getestete Lagerzeit. In Tabelle 2 ist ein Vergleich zwischen Mehl und Maltodextrin als Trägerstoff für verschiedene Aromen über eine simulierte Lagerzeit von einem Jahr gezeigt. Die Mehle sind dem Maltodextrin dabei sichtlich überlegen und stabilisieren das Aroma deutlich besser.

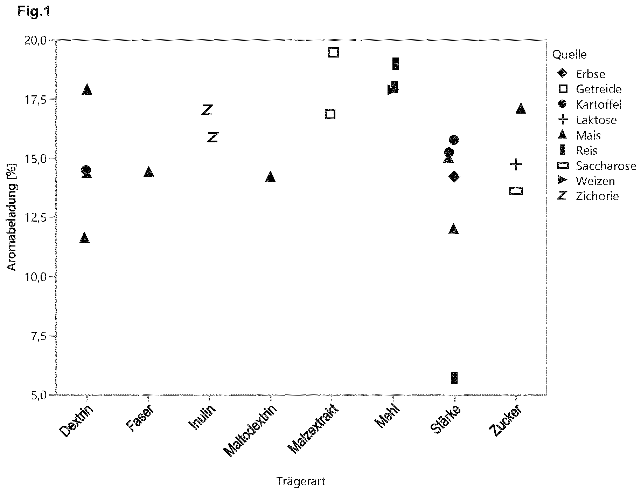

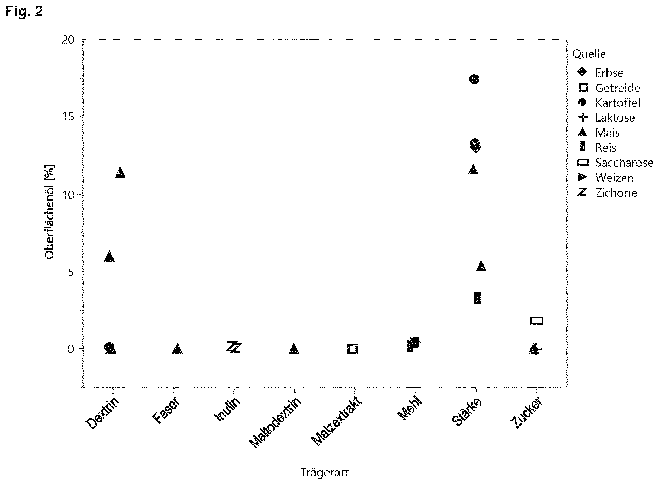

Figuren 1 und 2 zeigen jeweils die Aromabeladung und das Oberflächenöl verschiedener sprühgetrockneter Zusammensetzungen mit unterschiedlichen Trägerstoffen. Eine Aromabeladung mit wenig Verlust (0 bis max. 10 Gew.-%) des eingesetzten Aromas bei der Sprühtrocknung ist dabei ein Anzeichen für eine gute Stabilisierung (Verkapselung) des Aromas durch den Träger. Bei den erfindungsgemäß einzusetzenden Mehlen liegt die Aromabeladung in der sprühgetrockneten Zusammensetzung fast bei den in der Formulierung eingesetzten 20 Gew.-% Aroma vor der Sprühtrocknung, d.h. es kommt kaum zu Verlust des Aromas. Ein weiteres Maß für die Stabilisierung (Verkapselung) des Aromas durch den Träger ist der Oberflächenölanteil. Wenn die Stabilisierung unzureichend ist, kommt es zum Austritt von Öl auf der Oberfläche. Figur 2 ist zu entnehmen, dass das Oberflächenöl der sprühgetrockneten Zusammensetzungen mit Mehlen als Trägerstoff unter 5 Gew.-% liegt. Wünschenswert ist insbesondere ein Oberflächenölanteil von 0 bis maximal 1 Gew.-%. Schließlich sollte auch die Öltröpfchengröße vor und nach der Sprühtrocknung unverändert kleiner/gleich 1 µm im D50 sein.

Es war eine Aufgabe der vorliegenden Erfindung einen natürlichen Trägerstoff für eine sprühgetrocknete Aromazusammensetzung bereitzustellen, der eine ausreichend hohe Aromabeladung erlaubt.

Weiterhin war es Aufgabe der vorliegenden Erfindung einen natürlichen Trägerstoff für eine sprühgetrocknete Aromazusammensetzung bereitzustellen, der einen möglichst geringen Oberflächenölanteil der damit hergestellten sprühgetrockneten Aromazusammensetzung ermöglicht.

Schließlich war es auch eine Aufgabe der vorliegenden Erfindung einen natürlichen Trägerstoff für eine sprühgetrocknete Aromazusammensetzung bereitzustellen, der eine gute Lagerstabilität der Aromazusammensetzung gewährleistet.

Die oben genannten Aufgaben werden erfindungsgemäß gelöst durch die sprühgetrockneten Aromazusammensetzungen wie in den Ansprüche dargestellt. Offenbart sind (im gesamten Umfang nicht gemäss der Erfindung) sprühgetrocknete Aromazusammensetzung umfassend oder bestehend aus:
a) 5 Gew.-% bis 60 Gew.-%, bevorzugt 10 Gew.-% bis 30 Gew.-% eines Aromas, und
b) 10 Gew.-% bis 80 Gew.-%, bevorzugt 20 Gew.-% bis 60 Gew.-% Mehl,
jeweils bezogen auf das Gesamtgewicht der sprühgetrockneten Aromazusammensetzung.

Die sprühgetrocknete Aromazusammensetzung kann neben dem Mehl und dem Aroma optional noch weitere Inhaltsstoffe umfassen. Insbesondere kann ein Emulgator enthalten sein. Bevorzugt besteht die sprühgetrocknete Aromazusammensetzung aber nur aus dem Aroma und dem Mehl.

Unter einem Aroma ist im Zusammenhang mit der vorliegenden Erfindung ein oder eine Mischung aus zwei oder mehr Geruchs- und oder Geschmacksstoff(en) zu verstehen, welche eine oder mehrere Geruchs- oder Geschmacksnote(n) vermitteln. Insbesondere umfasst sind auch komplexe Aromen, so wie z.B. Würzmischungen. Das Aroma kann neben dem/den Geruchs- und oder Geschmacksstoff(en) noch weitere übliche Inhaltsstoffe enthalten.

Unter einem Mehl ist im Zusammenhang mit der vorliegenden Erfindung ein Pulver zu verstehen, dass z.B. beim Mahlen von Reis, Getreide, Hülsenfrüchten, Quinoa, Erbsen oder Kartoffeln entsteht. Mehle enthalten in der Regel ca. 70 % Kohlenhydrate (hauptsächlich Stärke), 14 % Wasser, ca. 10% Protein, 1 % Fett und 1 % Mineralsalze. Je nach Herkunft und Verarbeitung können diese Werte jedoch abweichen. Umfasst sind von dem Begriff "Mehl" im Zusammenhang mit der vorliegenden Erfindung auf verschiedene Arten erhaltene, z.B. nass- oder trockenvermahlene Mehle, sowie speziell behandelte Mehle, die beispielsweise (enzymatisch) hydrolysiert wurden.

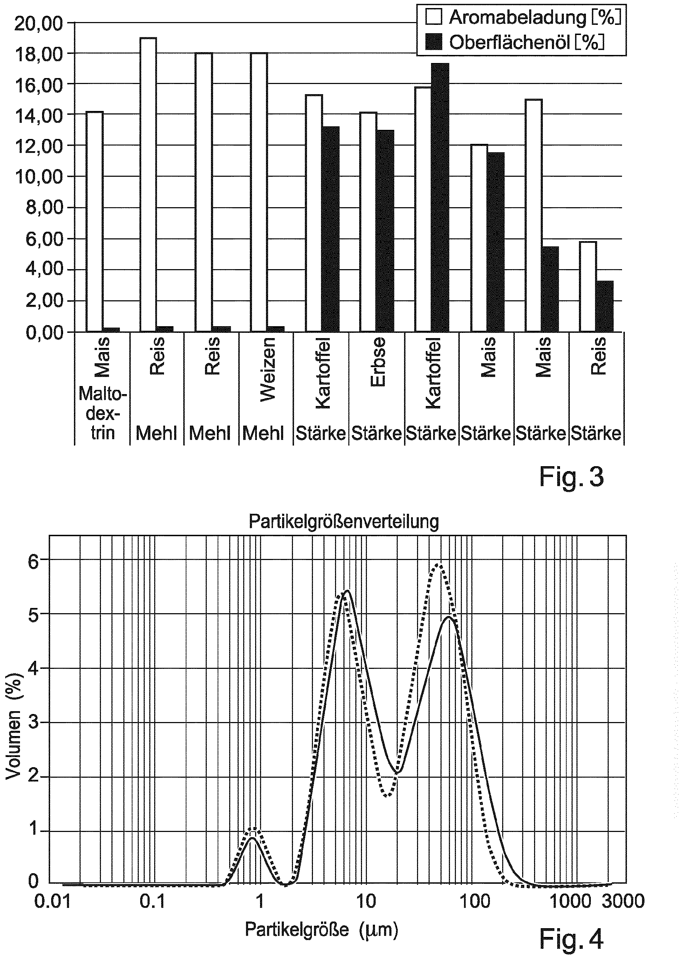

Wie den Figuren 1 und 3 gezeigt, liegt die Aromabeladung bei den erfindungsgemäß einzusetzenden Mehle zwischen 17 und 20 Gew.-% der sprühgetrockneten Aromazusammensetzung. Bei der Bestimmung dieser Werte wurden 20 Gew.-% Aroma vor der Sprühtrocknung in der Formulierung eingesetzt. Die Stärken erreichen nur Werte bis ca. 16 Gew.-% Aroma in der sprühgetrockneten Aromazusammensetzung. Mehle sind daher besser geeignet Aromen zu stabilisieren, so dass es beim Sprühtrocknen kaum zu Verlusten an Aroma kommt.

Bei einem erfindungsgemäß einzusetzenden Mehl liegt der Verlust daher unter 10 Gew.-% des eingesetzten Aromas vor der Sprühtrocknung, bevorzugt unter 5 Gew.-%, besonders bevorzugt unter 3 und ganz besonders bevorzugt unter 1 Gew.-%.

Sprühtrocknung stellt eine gängige Methode aus der Verfahrenstechnik dar, die dem Fachmann hinlänglich bekannt ist. Dabei wird eine Lösung, Suspension oder Emulsion enthaltend das zu trocknende Gut in einem heißen Gasstrom zerstäubt und dadurch zu einem feinen Pulver getrocknet.

Bevorzugt hat das erfindungsgemäß einzusetzende Mehl eine Partikelgröße von kleiner 200 µm, besonders bevorzugt kleiner 100 µm, ganz besonders bevorzugt kleiner 50 µm.

Gemäß der Erfindung ist das Mehl ausgewählt aus der Gruppe bestehend aus Reismehl, Getreidemehl, Hülsenfruchtmehl, Quinoamehl, und Kartoffelmehl bevorzugt ausgewählt aus der Gruppe bestehend aus Reismehl, Weizenmehl, Erbsenmehl und Kartoffelmehl.

Im Rahmen der vorliegenden Erfindung wurden verschiede Mehle unter mehreren Gesichtspunkten, auf ihre Eignung als Trägerstoff für Aromazusammensetzungen untersucht. Dabei haben sich die oben genannten Mehle als besonders vorteilhaft herausgestellt. Ganz besonders bevorzugt ist ein hydrolysiertes Reismehl.

Erfindungsgemäß bevorzugt ist weiterhin eine sprühgetrocknete Aromazusammensetzung wie oben beschrieben, wobei das Mehl trocken- oder nassvermahlen und/oder enzymatisch modifiziert, vorzugsweise mit einer Amylase hydrolysiert ist.

Das eingesetzte Mehl kann auf unterschiedliche Weisen erhalten und gegebenenfalls zusätzlich behandelt worden sein. Enzymatische Behandlungen wie z.B. die (teilweise) Hydrolyse durch Amylasen führen zu besonders geeigneten Eigenschaften. Bei der Vorbehandlung des Mehls ist allerdings darauf zu achten, dass die enthaltenen Proteine nicht so stark denaturiert werden, dass sie Ihre emulgierenden Eigenschaften verlieren.

Besonders bevorzugt ist eine sprühgetrocknete Aromazusammensetzung wie oben beschrieben, wobei das Mehl einen Proteinanteil von 0.5 Gew.-% bis 15 Gew.-%, bevorzugt 3 Gew.-% bis 10 Gew.-% bezogen auf das Gesamtgewicht des Mehls aufweist.

Es hat sich im Rahmen der vorliegenden Erfindung gezeigt, dass ein gewisser Proteinanteil im Mehl zu einer besonders guten Verkapselung des bzw. der Aromen führt. Wie weiter oben ausgeführt wird davon ausgegangen, dass sich die Proteine an der Grenzfläche anlagern, die Emulsion dadurch bis zur Trocknung stabilisieren und später im Pulver durch eine verstärkte Grenzschicht das Aroma vor der Oxidation schützen. Damit ist das Aroma stabil verkapselt und die Aromazusammensetzung deutlich länger lagerungsbeständig als beispielweise eine Aromazusammensetzung mit Maltodextrin als Trägerstoff.

Erfindungsgemäß bevorzugt ist auch eine sprühgetrocknete Aromazusammensetzung wie oben beschrieben, wobei das Aroma ausgewählt ist aus der Gruppe bestehend aus Fruchtaromen, insbesondere Zitrusaromen, Fleisch-, Gemüse- und Gewürzaromen sowie Fleisch-, Gemüse- und Gewürzextrakte.

Vorteilhafterweise eignet sich die erfindungsgemäße Aromazusammensetzung für die Verarbeitung wichtiger Aromen wie Früchte-, Fleisch-, Gemüse- und Gewürzaromen, sowie die jeweiligen Extrakte. Damit ist eine vielseitige Anwendung in Nahrungs- und Genussmitteln, Würzmischungen, Tiernahrung, pharmazeutischen und der Mundpflege dienenden Produkten gewährleistet.

Gemäß einer besonders bevorzugten Ausführungsform enthält die erfindungsgemäße Aromazusammensetzung weniger als 20 Gew.-%, bevorzugt weniger als 10 Gew.-%, besonders bevorzugt weniger als 1 Gew.-% Emulgator und ganz besonders bevorzugt keinen Emulgator.

Standardrezepturen für sprühgetrocknete Pulver bestehen aus etwa 20 Gew.-% Aroma, 20 Gew.-% Emulgator (z.B. Gummi arabicum) und 60 Gew.-% Trägerstoff. Im Rahmen der vorliegenden Erfindung hat sich herausgestellt, dass wenn die erfindungsgemäß einzusetzenden Mehle verwendet werden, der Anteil an Emulgator in der sprühgetrockneten Aromazusammensetzung signifikant reduziert oder sogar vollständig auf den Einsatz von Emulgator verzichtet werden kann. Dabei reicht der natürliche Proteinanteil des Mehls dazu aus des Aroma zu emulgieren und es kann vorteilhafterweise der Zusatz eines weiteren als "nicht natürlich" empfundenen Zusatzstoffes reduziert bzw. vermieden werden.

Die sprühgetrocknete Aromazusammensetzung weist gemäß einer Ausführungsform der vorliegenden Erfindung einen Oberflächenölanteil von weniger als 3 Gew.-% bevorzugt weniger als 1 Gew.-% auf, jeweils bezogen auf das Gesamtgewicht der sprühgetrockneten Aromazusammensetzung.

Der geringe Oberflächenölanteil der erfindungsgemäßen sprühgetrockneten Aromazusammensetzung ergibt sich aus der besonders stabilen Verkapselung des Aromas durch das Mehl. Die Aromazusammensetzung ist daher trocken und neigt nicht zum Verkleben. Tritt Öl an der Oberfläche aus, bedeutet dies, dass der Träger nicht in der Lage ist das Aroma ausreichend zu verkapseln. Wie den Figuren 2 und 3 zu entnehmen ist, haben die sprühgetrockneten Aromazusammensetzungen mit den erfindungsgemäß einzusetzenden Mehlen als Träger einen Oberflächenölanteil von unter 5 Gew.-%, was mit Stärken nicht erreicht wird.

Offenbart wird auch ein Produkt enthaltend eine sprühgetrocknete Aromazusammensetzung wie oben beschrieben, bevorzugt ausgewählt aus der Ernährung oder dem Genuss dienenden Produkten, pharmazeutischen Produkten, der Mundpflege dienenden Produkten, Tiernahrung und Würzmischungen.

Die erfindungsgemäße sprühgetrocknete Aromazusammensetzung kann vielseitig eingesetzt und in verschiedenen Produkten verarbeitet werden. Dabei liegt der Anteil an der sprühgetrockneten Aromazusammensetzung in dem jeweiligen Produkt abhängig von dessen Beschaffenheit etwa zwischen 0.01 und 5 Gew.-%, jeweils bezogen auf das Gesamtgewicht des Produkts. Ja nach Art des Produktes enthält dieses neben der sprühgetrockneten Aromazusammensetzung weitere übliche Inhaltsstoffe, besonders bevorzugt enthält das Produkt (sprühgetrocknete) färbende Zusammensetzungen. Solche färbenden Zusammensetzungen enthalten vorzugweise färbende Substanzen pflanzlichen Ursprungs und bestehen ganz besonders bevorzugt ebenfalls ausschließlich aus Inhaltsstoffen, die der Verbraucher als natürliche Nahrungsmittel versteht und die daher für "clean label"-Produkte geeignet sind.

Beispiele für den Anteil der erfindungsgemäßen Aromazusammensetzung in Gew.-% in verschiedenen Produkten:

| | |
|---|---|
| Teig | 0.05 - 2.0 % |
| Fettfüllung | 0.1 - 2.5 % |
| Bonbons | 0.1 - 0.4 % |
| Fruchtgummis | 0.04 - 0.3 % |
| Eis | 0.05 - 0.5 % |
| Dessert | 0.03 - 0.6 % |
| Tee | 1.5 - 5.0 % |
| Suppe & Soße | 0.04 - 0.5 % |
| Dressing | 0.02 - 0.5 % |
| Wurst | 0.03 - 0.6 % |
| Salat | 0.02 - 0.3 % |
| Käse | 0.03 - 0.6 % |
| Fertiggerichte | 0.05 - 0.5 % |
| Tierfutter | 0.001 - 0.5 % |

Die vorliegende Erfindung betrifft auch ein Verfahren zur Herstellung einer sprühgetrockneten Aromazusammensetzung wie oben beschrieben, umfassend die oder bestehend aus den folgenden Schritten:
i) Dispergieren eines Mehls und optional eines Emulgators in einem Dispersionsmittel,
ii) Hinzufügen eines Aromas zu der Dispersion aus Schritt i),
iii) Homogenisieren der Mischung aus Schritt ii), und
iv) Sprühtrocknen der Mischung aus Schritt iii) um eine sprühgetrocknete Aromazusammensetzung zu erhalten.

Das Mehl und der optional zu verwendende Emulgator (üblicherweise Gummi arabicum oder modifizierte Stärke) werden zunächst in einem Dispersionsmittel, bevorzugt Wasser dispergiert. Sobald diese Mischung vollständig solvatisiert ist wird das Aroma zugefügt und homogenisiert. Durch Sprühtrocknung der entstandenen Mischung wird die erfindungsgemäße Zusammensetzung erhalten.

Bevorzugte Viskositäten des Trägerstoffes liegen bei:
Für eine 10 %ige Dispersion: 1-10 mPa*s
für eine 30 %ige Dispersion : 3 - 50 mPa*s
für eine 60 %ige Dispersion: 50 - 500 mPa*s

Das Mehl ist ausgewählt aus der Gruppe bestehend aus Reismehl, Getreidemehl, Hülsenfruchtmehl, Quinoamehl, und Kartoffelmehl bevorzugt ausgewählt aus der Gruppe bestehend aus Reismehl, Weizenmehl, Erbsenmehl und Kartoffelmehl.

Das Mehl hat bevorzugt einen Proteinanteil von 0.5 Gew.-% bis 15 Gew.-%, bevorzugt 3 Gew.-% bis 10 Gew.-% bezogen auf das Gesamtgewicht des Mehls.

Im Hinblick auf das Mehl und dessen Proteinanteil sowie die Verarbeitung und optionale (enzymatische) Behandlung gilt das oben Gesagte entsprechend. Allerdings kann bei zu stark denaturierender Vorbehandlung das Mehl seine Löslichkeit und damit auch seine emulgierenden Eigenschaften ganz oder teilweise verlieren. Es ist daher darauf zu achten, dass die enthaltenen Proteine keiner denaturierenden Vorbehandlung ausgesetzt werden, da sonst der Verkapselungseffekt verloren geht. Insbesondere sollten hohe Temperaturen bei der Verarbeitung vermieden werden.

Die vorliegende Erfindung betrifft auch eine sprühgetrocknete Aromazusammensetzung wie oben beschrieben, herstellbar oder hergestellt durch ein Verfahren wie oben beschrieben.

Durch die erfindungsgemäße Herstellung der Aromazusammensetzung kommt es zu einer besonders stabilen Verkapselung des Aromas aufgrund des natürlichen Proteinanteils des verwendeten Mehls wie oben beschrieben, wodurch das Aroma vor Oxidation geschützt wird und eine besonders gute Lagerstabilität aufweist.

Schließlich betrifft die vorliegende Erfindung auch die Verwendung von Mehl als Trägerstoff in einer sprühgetrockneten Aromazusammensetzung, zum Verkapseln von Aromen in einer sprühgetrockneten Aromazusammensetzung.

Das Mehl ist dabei ausgewählt aus der Gruppe bestehend aus Reismehl, Getreidemehl, Hülsenfruchtmehl, Quinoamehl, und Kartoffelmehl bevorzugt ausgewählt aus der Gruppe bestehend aus Reismehl, Weizenmehl, Erbsenmehl und Kartoffelmehl. Das Mehl kann einen Proteinanteil von 0.5 Gew.-% bis 15 Gew.-%, bevorzugt 3 Gew.-% bis 10 Gew.-% bezogen auf das Gesamtgewicht des Mehls aufweisen.

Die Verwendung von Mehlen als Trägerstoff für sprühgetrocknete Aromazusammensetzungen bringt überraschende Vorteile mit sich. Diese werden in erster Linie auf den natürlichen Proteingehalt der Mehle zurückgeführt, der eine besonders stabile Emulsion und Verkapselung des Aromas ermöglicht, so dass die Zusammensetzung über lange Zeit stabil bleibt und auf den Einsatz von Emulgatoren bei der Herstellung (weitgehend) verzichtet werden kann.

### Kurze Beschreibung der Figuren:

**Figur 1** zeigt die Aromabeladung einiger Trägerarten. Die Bestimmung der Aromabeladung der sprühgetrockneten Pulver wurde mittels simultaner Destillation und Extraktion durchgeführt. Dafür wurden 0,5 g Probe mit 70 g gesättigter NatriumchloridLösung, 1 % internen Standard (2-Nonanol) und 5 ml tert-Butyl-Methyl-Ether (TBME) in einem Rundkolben vermischt und erhitzt. Auf Grund des Temperaturanstieges trennen sich die leichtflüchtigen Stoffe von den nicht-flüchtigen Komponenten. Der Wasserdampf trägt die leichtflüchtigen Stoffe in den Extraktions-Behälter mit Soxhlet Aufsatz. Die Aromamoleküle reichern sich in der organischen Phase an. Das kondensierte Wasser wird zurück in den Glaskolben geführt. Dieser Zyklus wiederholt sich dreimal. Die organische Phase wird anschließend über wasserfreiem Natriumsulfat getrocknet und mittels Gaschromatographie analysiert.
**Figur 2** zeigt das Oberflächenöl einiger Trägerarten. Die Bestimmung des Oberflächenöls der Pulver erfolgte indem das Aroma mittels eines Lösungsmittels von der Oberfläche des Sprühproduktes gewaschen wurde. Dafür wurden 0,5 g der Probe in ein Reagenzglas eingewogen und 4 g eines organischen Lösungsmittels, in diesem Fall n-Pentan/ Diethyl Ether (2:1), hinzugegeben. Die Mischung wurde für 10 min geschüttelt, anschließend die Öl-Phase abfiltriert und das abgewaschene Aroma gravimetrisch bestimmt.
**Figur 3** zeigt die Verkapselungseffizienz der getesteten Mehle und Stärken und von Maltodextrin. Die linke Säule stellt dabei jeweils die Aromabeladung in Gew.-% und die rechte Säule das Oberflächenöl in Gew.-% jeweils bezogen auf das Gesamtgewicht der sprühgetrockneten Aromazusammensetzung dar. Die genannten Reismehle, Maismehle und Kartoffelmehle sind jeweils von verschiedenen Herstellern und unterscheiden sich in der Partikelgröße, der Viskosität und/oder der Vorbehandlung.
**Figur 4** zeigt die Partikelgrößenverteilung von Emulsionen, die aus a) 20 Gew.-% Aroma, 20 Gew.-% Emulgator (modifizierte Stärke) und 60 gew.-% Trägerstoff (Reismehl) bzw. b) 20 Gew.-% Aroma und 80 Gew.-% Trägerstoff (Reismehl) bestehen. Rezepturen: **dunklere Linie** bestehend aus 20 Gew.-% Aroma, 20 Gew.-% Emulgator (modifizierte Stärke) und 60 Gew.-% Trägermaterial (Reismehl); **hellere Linie** bestehend aus 20 Gew.-% Aroma und 80 Gew.-% Träger (Reismehl). Beide Rezepturen wurden mit der gleichen Masse an Wasser und Feststoffanteil hergestellt. Die entstandenen Emulsionen wurden mittels Mastersizer 2000 vermessen. Es ist festzustellen, dass die Kurven mit und ohne standardmäßig verwendetem Emulgator (mod. Stärke) nahezu deckungsgleich sind.

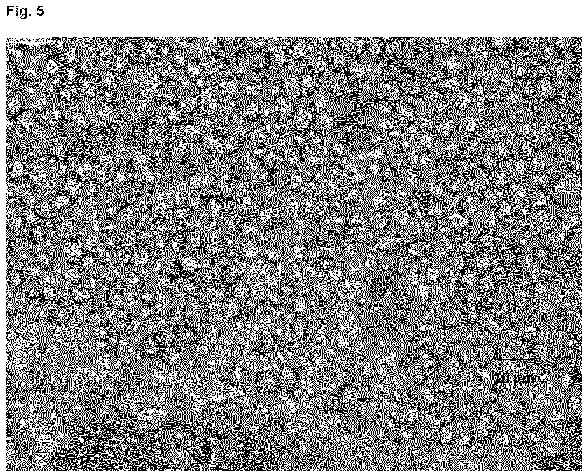

**Figur 5** zeigt eine mikroskopische Aufnahme der Emulsion. Man sieht deutlich Stärkekörner im Größenbereich von 5-10 µm, die dem 2. Peak in der Mastersizer-Messung entsprechen.

### Beispiel 1: Untersuchung der Emulgierfähigkeit

Verwendet wurde nassvermahlenes Reismehl mit 6,5 - 10 Gew.-% Proteingehalt (Laut Spezifikation).

Rezepturen:
a) 20 Gew.-% Aroma, 20 gew.-% Emulgator (modifizierte Stärke) und 60 Gew.-% Trägermaterial (Reismehl);
b) 20 Gew.-% Aroma und 80 Gew.-% Träger (Reismehl)

Beide Rezepturen wurden mit der gleichen Masse an Wasser und Feststoffanteil hergestellt. Die entstandenen Emulsionen wurden mittels Mastersizer 2000 vermessen.

In Figur 4 sind die Ergebnisse dargestellt. Es ist festzustellen, dass die Kurven mit und ohne standardmäßig verwendetem Emulgator (modifizierte Stärke) nahezu deckungsgleich sind. Besonderes Augenmerk ist auf den ersten Peak bei 1 µm zu richten, der die Öltröpfchen darstellt. Der zweite Peak wird durch die Stärkekörnchen hervorgerufen wie in der mikroskopischen Aufnahme (Figur 5) zu sehen ist. Der Balken entspricht 10 µm. Der dritte Peak zeigt vermutlich Agglomerate, die in der Dispersionseinheit des Mastersizers nicht separiert werden.

Beide hergestellten Emulsionen zeigen nach 20 Stunden keinen Ölabsatz. Durch diese Versuche kann die Theorie, dass der Proteingehalt des Mehles für die guten verkapselnden Eigenschaften der Mehle verantwortlich ist belegt werden.

Diese Art Versuche wurden noch mit weiteren Reismehlen durchgeführt, die sich in der Art der Vermahlung (nass und trocken), im Amylosegehalt (hoch und niedrig), in der Partikelgröße (D90 von 50 - 150 µm), in der Viskosität und in der Art des Reis (normaler Reis oder Wachsreis) unterscheiden.

Die Ergebnisse sind den dargestellten vergleichbar.

Damit muss festgehalten werden, dass nicht nur enzymatisch aufgeschlossene Mehle als kombinierte Träger und Emulgatoren für die Sprühtrocknung funktionieren, sondern auch rein mechanisch behandelte (trocken- und nassvermahlen).

### Beispiel 2: Formulierungen für ein Eistee-Getränk (Schwarztee)

| **Inhaltsstoff** | **Einsatz in Gew.-%** | |
|---|---|---|
| | **A** | **B** |
| Schwarztee-Extrakt | 1,4 | 1,4 |
| Zucker | 7 | 7 |
| Zitronensäure (kristallin) | 1,2 | 1,2 |
| Ascorbinsäure | 0,2 | 0,2 |
| **Sprühgetrocknetes Aroma mit Zitronengeschmack** | 3.0 | 5,5 |
| Wasser | Ad 100 | |

Schwarztee-Extrakt wurde in Wasser gelöst und zusammen mit Zucker, einer Aromazubereitung sowie dem sprühgetrockneten Aroma in einem Becherglas verrührt.

### Beispiel 3: Formulierungen für ein Kaugummi

| **Teil** | **Inhaltsstoff** | **Einsatz in Gew.-%** |
|---|---|---|
| A | Kaugummibase, Company "Jagum T" | 30,00 |
| B | Sorbit, pulverisiert | 39,00 |
| | Isomalt^{®} (Palatinit GmbH) | 9,50 |
| | Xylit | 2,00 |
| | Mannit | 3,00 |
| | Aspartam^{®} | 0,10 |
| | Acesulfam^{®}K | 0,10 |
| | Emulgum^{®} (Colloides Naturels, Inc.) | 0,30 |
| C | Sorbitol, 70%ig in Wasser | 14,00 |
| | Glycerin | 1,00 |
| D | **Sprühgetrocknetes Aroma mit Sparemintgeschmack** | 1,00 |

Die Teile A bis D wurden gemischt und intensiv geknetet. Die Rohmasse kann z.B. in Form von dünnen Streifen zu verzehrfertigen Kaugummis verarbeitet werden.

### Beispiel 4: Rezeptur für einen Mürbeteigkeks

| **Inhaltstoff** | **Einsatz in Gew.-%** |
|---|---|
| Butter | 33,00 |
| Puderzucker | 16,00 |
| Salz | Prise |
| Ei | 1 Stück |
| Mehl | 50,00 |
| Sprühgetrocknetes Aroma mit Orangengeschmack | 1,00 |

Die Komponenten werden zügig zu einem geschmeidigen Teig verarbeitet. Der Teig wird nach 1 Stunde Ruhezeit bei ca. 5°C wie gewünscht ausgeformt und bei 190°C 12 - 15 Minuten gebacken.

**Tabelle 1**

| ***Träger*** | ***Reis-Stärke*** | ***Mais-Stärke*** | ***KartoffelStärke*** | ***KartoffelStärke*** | ***Erbsen-Stärke*** | ***Mais-Stärke*** | ***WeizenMehl*** | ***Reis-Mehl*** | ***ErbsenMehl*** |
|---|---|---|---|---|---|---|---|---|---|
| ***simulierter Zeitraum*** | ***12 Monate*** | ***12 Monate*** | ***12 Monate*** | ***12 Monate*** | ***12 Monate*** | ***12 Monate*** | ***12 Monate*** | ***12 Monate*** | ***12 Monate*** |
| ***Menge*** | ***20g*** | ***20g*** | ***20g*** | ***20g*** | ***20g*** | ***20g*** | ***20g*** | ***20g*** | ***20g*** |
| ***Datum*** | ***11.07.2016*** | ***18.07.2016*** | ***18.07.2016*** | ***19.07.2016*** | ***19.07.2016*** | ***19.07.2016*** | ***18.07.2016*** | ***19.07.2016*** | ***19.07.2016*** |
| *Farbe ΔE (gealtert*/*frisch)* | *kein Farbunterschied* | *kein Farbunterschied* | *kein Farbunterschied* | *kein Farbunterschied* | *kein Farbunterschied* | *kein Farbunterschied* | *kein Farbunterschied* | *kein Farbunterschied* | *kein Farbunterschied* |
| *Druckabfall* | -*9,49* | *-14,36* | -*12,92* | *-6,36* | -*2,55* | *-9,15* | -*1,21* | *-14,41* | *-0,81* |
| *sensorische Signifikanz* | ***Ja*** | ***Ja*** | ***Ja*** | ***Ja 9:1*** | ***Ja 7:3*** | ***Ja 7:3*** | ***Nein*** | ***Nein*** | ***Nein*** |
| *sensorische Beschreibung* | *dumpfer*, *oxidiert, minimal ranzig, weniger frisch, flach im Profil* | *alt, vergammelt, schalig, bitter (3x), grün (2x), oxibiert, seifig, plastik, leicht ranzig, Profilverschiebung, sauer,* | *extrem ranzige Note, oxidiert (3x) bitter (2x), grün, schalig, kaputt, alt, terpenig, furchtbar,* | *schwächer, breits geruchlich zu erkenen, gestresst, oxidiert (4x), terpenig, schalig, leicht bittere Noten, leicht ranzig,* | *schwächer, breits geruchlich zu erkenen, gestresst, oxidiert (4x), terpenig, schalig, leicht bittere Noten, leicht ranzig,* | *terpenig, oxidiert, deutlich flacher im Profil,* | - | - | - |
| *Evaluierung* | *Durchgefallen* | *Durchgefallen* | *Durchgefallen* | *Durchgefallen* | *Durchgefallen* | *Durchgefallen* | *Bestanden* | *Bestanden* | *Bestanden* |

**Tabelle 2**

| | **Zitronenaroma** | | **Aroma Typ Pfeffer** | | **Huhnaroma** | |
|---|---|---|---|---|---|---|
| ***Träger*** | ***Reismehl*** | ***Maltodextrin*** | ***Reismehl*** | ***Maltodextrin*** | ***Reismehl*** | ***Maltodextrin*** |
| ***simulierter Zeitraum*** | ***12 Monate*** | ***12 Monate*** | ***12 Monate*** | ***12 Monate*** | ***12 Monate*** | ***12 Monate*** |
| ***Menge*** | ***20g*** | ***20g*** | ***20g*** | ***20g*** | ***20g*** | ***20g*** |
| ***Datum*** | ***19.07.2016*** | ***17.08.2016*** | ***27.02.2017*** | ***21.02.2017*** | ***13.12.2016*** | ***14.12.2016*** |
| *Farbe* Δ*E (gealtert*/*frisch)* | *kein Farbunterschied* | *kein Farbunterschied* | *kein Farbunterschied* | *kein Farbunterschied* | 4,62 | *6,05* |
| *Druckabfall* | *-14,41* | -*4,28** | *-1,83* | *-1,34* | *-20,23* | -*7,74* |
| *sensorische Signifikanz* | ***Nein*** | *Nein(Grenz wertig)* | *Nein* | *Grenzwertig* | *Nein* | *Ja* |
| *sensorische Beschreibung* | - | *flacher im Profil, weniger fruchtig, oxidiert, schalig bitter,* | - | *im Geschmack und Geruch intensiver, weniger schärfe, frischer, stärker (2x), deutlich schwächer* | - | *weniger intensiv, bitter, "nasser H schwächer pap* |
| *Evaluierung* | ***Bestanden*** | ***Durchgefallen*** | ***Bestanden*** | ***Grenzwertig*** | ***Bestanden*** | ***Durchgefalle*** |

## Patentansprüche

1. Sprühgetrocknete Aromazusammensetzung umfassend oder bestehend aus:
a) 10 Gew.-% bis 30 Gew.-% eines Aromas, und
b) 10 Gew.-% bis 80 Gew.-%, bevorzugt 20 Gew.-% bis 60 Gew.-% Mehl,
jeweils bezogen auf das Gesamtgewicht der sprühgetrockneten Aromazusammensetzung, wobei das Mehl ausgewählt ist aus der Gruppe bestehend aus Reismehl, Getreidemehl, Hülsenfruchtmehl, Quinoamehl und Kartoffelmehl bevorzugt ausgewählt aus der Gruppe bestehend aus Reismehl, Weizenmehl, Erbsenmehl und Kartoffelmehl.

2. Sprühgetrocknete Aromazusammensetzung nach Anspruch 1, wobei das Mehl trocken- oder nassvermahlen und/oder enzymatisch modifiziert, vorzugsweise mit einer Amylase hydrolysiert, ist.

3. Sprühgetrocknete Aromazusammensetzung nach Anspruch 1 oder 2, wobei das Mehl einen Proteinanteil von 0.5 Gew.-% bis 15 Gew.-%, bevorzugt 3 Gew.-% bis 10 Gew.-% bezogen auf das Gesamtgewicht des Mehls aufweist.

4. Sprühgetrocknete Aromazusammensetzung nach einem der vorhergehenden Ansprüche, wobei das Aroma ausgewählt ist aus der Gruppe bestehend aus Fruchtaromen, insbesondere Zitrusaromen, Fleisch-, Gemüse- und Gewürzaromen sowie Fleisch-, Gemüse- und Gewürzextrakte.

5. Sprühgetrocknete Aromazusammensetzung nach einem der vorhergehenden Ansprüche, wobei die sprühgetrocknete Aromazusammensetzung weniger als 20 Gew.-%, bevorzugt weniger als 10 Gew.-%, besonders bevorzugt weniger als 1 Gew.-% Emulgator und ganz besonders bevorzugt keinen Emulgator enthält, jeweils bezogen auf das Gesamtgewicht der sprühgetrockneten Aromazusammensetzung.

6. Sprühgetrocknete Aromazusammensetzung nach einem der vorhergehenden Ansprüche, wobei die sprühgetrocknete Aromazusammensetzung einen Oberflächenölanteil von weniger als 3 Gew.-% bevorzugt weniger als 1 Gew.-% aufweist, jeweils bezogen auf das Gesamtgewicht der sprühgetrockneten Aromazusammensetzung.

7. Verfahren zur Herstellung einer sprühgetrockneten Aromazusammensetzung nach einem der Ansprüche 1 bis 6, umfassend die oder bestehend aus den folgenden Schritten:
i) Dispergieren eines Mehls und optional eines Emulgators in einem Dispersionsmittel,
ii) Hinzufügen eines Aromas zu der Dispersion aus Schritt i),
iii) Homogenisieren der Mischung aus Schritt ii), und
iv) Sprühtrocknen der Mischung aus Schritt iii) um eine sprühgetrocknete Aromazusammensetzung zu erhalten.

8. Sprühgetrocknete Aromazusammensetzung nach einem der Ansprüche 1 bis 6, herstellbar oder hergestellt durch ein Verfahren nach Anspruch 7.

9. Verwendung von Mehl als Trägerstoff in einer sprühgetrockneten Aromazusammensetzung zum Verkapseln von Aromen in einer sprühgetrockneten Aromazusammensetzung, wobei das Mehl ausgewählt ist aus der Gruppe bestehend aus Reismehl, Getreidemehl, Hülsenfruchtmehl, Quinoamehl, und Kartoffelmehl bevorzugt ausgewählt aus der Gruppe bestehend aus Reismehl, Weizenmehl, Erbsenmehl und Kartoffelmehl.

10. Verwendung nach Anspruch 9, wobei das Mehl einen Proteinanteil von 0.5 Gew.-% bis 15 Gew.-%, bevorzugt 3 Gew.-% bis 10 Gew.-% bezogen auf das Gesamtgewicht des Mehls aufweist.

## Claims

1. Spray-dried flavouring composition comprising or consisting of:
a) 10 wt.-% to 30 wt.-% of a flavouring, and
b) 10 wt.% to 80 wt.%, preferably 20 wt.% to 60 wt.% flour,
in each case with respect to the total weight of the spray-dried flavour composition, wherein the flour is selected from the group consisting of rice flour, cereal flour, legume flour, quinoa flour and potato flour preferably selected from the group consisting of rice flour, wheat flour, pea flour and potato flour.

2. Spray-dried flavouring composition according to claim 1, wherein the flour is dry- or wet-milled and/or enzymatically modified, preferably hydrolysed with an amylase.

3. Spray-dried flavouring composition according to claim 1 or 2, wherein the flour has a protein content of 0.5 wt.-% to 15 wt.-%, preferably 3 wt.-% to 10 wt.-%, with respect to the total weight of the flour.

4. Spray-dried flavouring composition according to any one of the preceding claims, wherein the flavour is selected from the group consisting of fruit flavours, in particular citrus flavours, meat, vegetable and spice flavours and meat, vegetable and spice extracts.

5. Spray-dried flavouring composition according to any one of the preceding claims, wherein the spray-dried flavouring composition comprises less than 20 wt.-%, preferably less than 10 wt.-%, more preferably less than 1 wt.-% emulsifier and most preferably no emulsifier, in each case with respect to the total weight of the spray-dried flavouring composition.

6. Spray-dried flavouring composition according to any one of the preceding claims, wherein the spray-dried flavouring composition has a surface oil content of less than 3 wt.-%, preferably less than 1 wt.-%, in each case with respect to the total weight of the spray-dried flavouring composition.

7. A process for preparing a spray-dried flavouring composition according to any one of claims 1 to 6, comprising or consisting of the following steps:
i) Dispersing a flour and optionally an emulsifier in a dispersing agent,
ii) adding a flavouring to the dispersion from step i),
iii) homogenising the mixture from step ii), and
iv) spray-drying the mixture from step iii) to obtain a spray-dried flavouring composition.

8. Spray-dried flavouring composition according to any one of claims 1 to 6, preparable or prepared by a process according to claim 7.

9. Use of flour as a carrier in a spray-dried flavouring composition for encapsulating flavours in a spray-dried flavouring composition, wherein the flour is selected from the group consisting of rice flour, cereal flour, legume flour, quinoa flour, and potato flour preferably selected from the group consisting of rice flour, wheat flour, pea flour and potato flour.

10. Use according to claim 9, wherein the flour has a protein content of 0.5 wt.-% to 15 wt.-% by weight, preferably 3 wt.-% to 10 wt.-% by weight, with respect to the total weight of the flour.

## Revendications

1. Composition aromatique séchée par pulvérisation comprenant ou constituée de:
a) 10 % en poids à 30 % en poids d'un arôme, et
b) 10 % en poids à 80 % en poids, de préférence 20 % en poids à 60 % en poids de farine,
respectivement par rapport au poids total de la composition aromatique séchée par pulvérisation, dans laquelle la farine est choisie dans le groupe constitué de la farine de riz, de la farine de céréales, de la farine de légumineuses, de la farine de quinoa et de la farine de pomme de terre, de préférence choisie dans le groupe constitué de la farine de riz, de la farine de blé, de la farine de pois et de la farine de pomme de terre.

2. Composition aromatique séchée par pulvérisation selon la revendication 1, dans laquelle la farine est moulue à sec ou par voie humide et/ou est modifiée de façon enzymatique, de préférence hydrolysée par une amylase.

3. Composition aromatique séchée par pulvérisation selon la revendication 1 ou 2, dans laquelle la farine présente une teneur en protéines comprise entre 0,5 % en poids et 15 % en poids, de préférence entre 3 % en poids et 10 % en poids, par rapport au poids total de la farine.

4. Composition aromatique séchée par pulvérisation selon l'une quelconque des revendications précédentes, dans laquelle l'arôme est choisi dans le groupe constitué par des arômes de fruits, en particulier des arômes d'agrumes, des arômes de viande, de légumes et d'épices ainsi que des extraits de viande, de légumes et d'épices.

5. Composition aromatique séchée par pulvérisation selon l'une quelconque des revendications précédentes, dans laquelle la composition aromatique séchée par pulvérisation contient moins de 20 % en poids, de préférence moins de 10 % en poids, de manière particulièrement préférée moins de 1 % en poids d'émulsifiant et de manière tout particulièrement préférée aucun émulsifiant, respectivement par rapport au poids total de la composition aromatique séchée par pulvérisation.

6. Composition aromatique séchée par pulvérisation selon l'une quelconque des revendications précédentes, dans laquelle la composition aromatique séchée par pulvérisation présente une teneur en huile de surface inférieure à 3 % en poids, de préférence inférieure à 1 % en poids, respectivement par rapport au poids total de la composition aromatique séchée par pulvérisation.

7. Procédé de production d'une composition aromatique séchée par pulvérisation selon l'une quelconque des revendications 1 à 6, comprenant ou consistant en les étapes suivantes:
i) disperser une farine et en option un émulsifiant dans un agent de dispersion,
ii) ajouter un arôme à la dispersion issue de l'étape i),
iii) homogénéiser le mélange issu de l'étape ii), et
iv) sécher par pulvérisation le mélange issu de l'étape iii) pour obtenir une composition aromatique séchée par pulvérisation.

8. Composition aromatique séchée par pulvérisation selon l'une quelconque des revendications 1 à 6, qui peut être produite ou est produite par un procédé selon la revendication 7.

9. Utilisation de farine en tant que support dans une composition aromatique séchée par pulvérisation pour encapsuler des arômes dans une composition aromatique séchée par pulvérisation, dans laquelle la farine est choisie dans le groupe constitué de la farine de riz, de la farine de céréales, de la farine de légumineuses, de la farine de quinoa et de la farine de pomme de terre, de préférence choisi dans le groupe constitué de la farine de riz, de la farine de blé, de la farine de pois et de la farine de pomme de terre.

10. Utilisation selon la revendication 9, dans laquelle la farine présente une teneur en protéines comprise entre 0,5 % en poids et 15 % en poids, de préférence entre 3 % en poids et 10 % en poids, par rapport au poids total de la farine.
